# EUROPÄISCHE PATENTSCHRIFT

(11) **EP 1 087 053 B1**
(45) Veröffentlichungstag und Bekanntmachung des Hinweises auf die Patenterteilung: **02.11.2006**
(21) Anmeldenummer: 00119242.6
(22) Anmeldetag: 06.09.2000
(51) Int. Cl.: D06F 58/28, G05D 22/02

(54) **Elektronische Schaltung zur Ermittlung des Trocknungsgrades von Wäsche in einem Wäschetrockner**
Electronic device for determining the drying degree of the laundry in a laundry drier
Dispositif électronique de determination du degré de séchage du linge dans un sèche-linge

(30) Priorität: 23.09.1999 DE 19945520
(43) Veröffentlichungstag der Anmeldung: 28.03.2001
(73) Patentinhaber: Diehl AKO Stiftung & Co. KG, 88239 Wangen (DE)
(72) Erfinder: Zinke, Michael, 88239 Wangen im Allgäu (DE)
(74) Vertreter: Diehl Patentabteilung

(56) Entgegenhaltungen:
- EP-A- 0 029 810
- DE-A- 2 800 981
- US-A- 3 758 959
- US-A- 3 782 001
- US-A- 5 367 265

## Beschreibung

Die Erfindung betrifft eine elektronische Schaltung zur Ermittlung des Trocknungsgrades von Wäsche in einem Wäschetrockner nach dem Oberbegriff des Patentanspruchs 1.

Solche Schaltungen sind zum Beispiel aus der DE 22 00 019 C3 und der EP 0 070 609 B1 bekannt. Dabei werden zwei Elektroden verwendet, welche mit Wäsche in einer Wäschetrommel eines Wäschetrockners in elektrischem Kontakt stehen können. Eine der beiden Elektroden ist meist geerdet, während an der anderen Elektrode eine gewisse Spannung anliegt, so daß ein geringer Strom durch die feuchte Wäsche in der Wäschetrommel fließen kann. Mit zunehmendem Trocknungsgrad der Wäsche während des Trocknungsvorgangs steigt der elektrische Widerstand der Wäsche an Wird nun von einer Auswerteschaltung dieser elektrische Widerstand ermittelt, kann auf den Trocknungsgrad der Wäsche zurückgeschlossen und gegebenenfalls der Trocknungsvorgang beendet werden.

Um den Bediener eines solchen Wäschetrockners auch beim Auftreten eines Fehlers in der Schaltung wirksam gegen einen elektrischen Schlag beim Berühren der Elektroden zu schützen, wird die gesamte Schaltung (Fühlerelektroden mit Auswerteeinheit) sowie die Trocknersteuerung mit Schutzkleinspannung betrieben, was dadurch erreicht wird, daß diese Stromkreise die benötigte Spannung mittels eines Sicherheitstransformators aus der Netzspannung erhalten, wodurch sie vom Stromnetz galvanisch getrennt sind.

Dies bringt jedoch die Nachteile mit sich, daß alle Schnittstellen zur Netzspannung besonderen Sicherheitsanforderungen genügen müssen, daß also neben dem Sicherheitstransformator zur Versorgung der Elektronik bei allen netzgebundenen Aus- bzw. Eingängen der Schaltung Sicherheitsbauelemente mit galvanischer Trennung (Relais, Optokoppler, Übertrager) verwendet werden müssen, was einen erheblichen Aufwand mit sich bringt.

Es ist daher in den U.S.A. bekannt, wo die Phase des Netzanschlusses eindeutig bestimmt ist, eine der Elektroden, die auf einem von Erde verschiedenen Potential liegt, über eine Schutzimpedanz mit der Phase der Netzspannung zu verbinden, wie dies zum Beispiel in der US-A-5,367,265 offenbart ist.

Ausgehend vom genannten Stand der Technik ist es die Aufgabe der Erfindung, eine elektronische Schaltung der eingangs genannten Art vorzuschlagen, bei welcher der Schutz des Bedieners auch bei einer Unbestimmtheit des Phasenanschlusses, wie es zum Beispiel in Europa üblich ist, gegen elektrischen Schlag beim Berühren der Fühlerelektroden gegeben ist, ohne dass die gesamte Schaltung mittels eines Sicherheitstransformators von der Netzspannung getrennt ist.

Diese Aufgabe wird durch eine elektronische Schaltung mit den Merkmalen des Patentanspruchs 1 gelöst. Ausgestaltungen und Weiterbildungen der Erfindung ergeben sich aus den Unteransprüchen.

Durch die Verbindung zumindest der nicht geerdeten Elektrode über mindestens eine erste Schutzimpedanz mit der Phase der Netzspannung ist die Verwendung eines Sicherheitstransformators nicht mehr notwendig. Die an der Elektrode anliegende Spannung ist bei Verwendung einer geeigneten Schutzimpedanz nur noch ein kleiner Bruchteil der anliegenden Netzspannung. Dadurch ist gewährleistet, dass der Bediener bei Berührung der Elektrode vor einem elektrischen Schlag geschützt ist. Die andere Elektrode ist geerdet.

Außerdem ist die nicht geerdete Elektrode über mindestens eine zweite Schutzimpedanz mit der Auswerteeinheit verbunden. Dadurch ist gewährleistet, dass die Auswerteeinheit ohne besondere Schutzerfordernisse, insbesondere ohne galvanische Trennung durch einen Sicherheitstransformator, an die Netzspannung angeschlossen werden kann.

In Ausgestaltung der Erfindung ist weiterhin vorgesehen, die nicht geerdete Elektrode als einen ersten Abgriff über die mindestens eine zweite Schutzimpedanz mit der Auswerteeinheit zu verbinden, einen zweiten Abgriff aus einer Spannungsteilerschaltung über mindestens eine dritte Schutzimpedanz mit der Auswerteeinheit zu verbinden und die Potentiale dieser beiden Abgriffe in der Auswerteeinheit miteinander zu vergleichen und/oder auszuwerten. Auf diese Weise läßt sich der Widerstand der Wäsche zwischen den Elektroden bestimmen.

In alternativer Ausbildung ist vorgesehen, zumindest einen Spannungsversorgungspol der Auswerteeinheit ebenfalls über mindestens eine Schutzimpedanz mit der Phase der Netzspannung zu verbinden. In diesem Fall ist eine Verbindung der nicht geerdeten Elektrode und des Abgriffs aus der Spannungsteilerschaltung mit der Auswerteeinheit nicht mehr über Schutzimpedanzen notwendig, sondern kann direkt erfolgen.

Das Ausgangssignal der Auswerteeinheit kann über mindestens eine weitere Schutzimpedanz einer Steuereinheit zugeführt sein. Dies ermöglicht eine direkte Verbindung von Auswerte- und Steuereinheit ohne galvanische Trennung, falls die Steuereinheit direkt an die Netzspannung angeschlossen ist.

Eine Schutzimpedanz umfaßt bevorzugt eine(n) oder mehrere Widerstände, Kondensatoren und/oder Induktivitäten.

In Weiterbildung wird vorgeschlagen, daß die Auswerteeinheit über Phase und Erde an die Netzspannung angeschlossen ist. Dies ist von Vorteil, wenn ein Netzstecker auf verschiedene Weisen in eine Steckdose gesteckt werden kann.

In Ausführung der Erfindung ist vorzugsweise vorgesehen, daß in der Auswerteeinheit erkannt wird, wenn die Wäsche beim Trocknungsvorgang einen vorbestimmbaren Widerstandswert erreicht, und daß daraufhin der Steuereinheit ein entsprechendes Signal übermittelt wird.

Als Vorteil der Erfindung ergibt sich, daß durch die direkte Verbindung der Schaltung mit dem Netzpotential netzspannungsführende Eingänge direkt ausgewertet und netzbezogene Ausgänge direkt (z. B. mittels Triacs) angesteuert werden können, wodurch die Schaltungsteile zur Erzeugung der Versorgungsspannung, der Auswertung der Eingänge und zur Ansteuerung der Ausgänge wesentlich einfacher aufgebaut sein können, was zu einer erheblichen Reduzierung des Bauteilaufwandes führt.

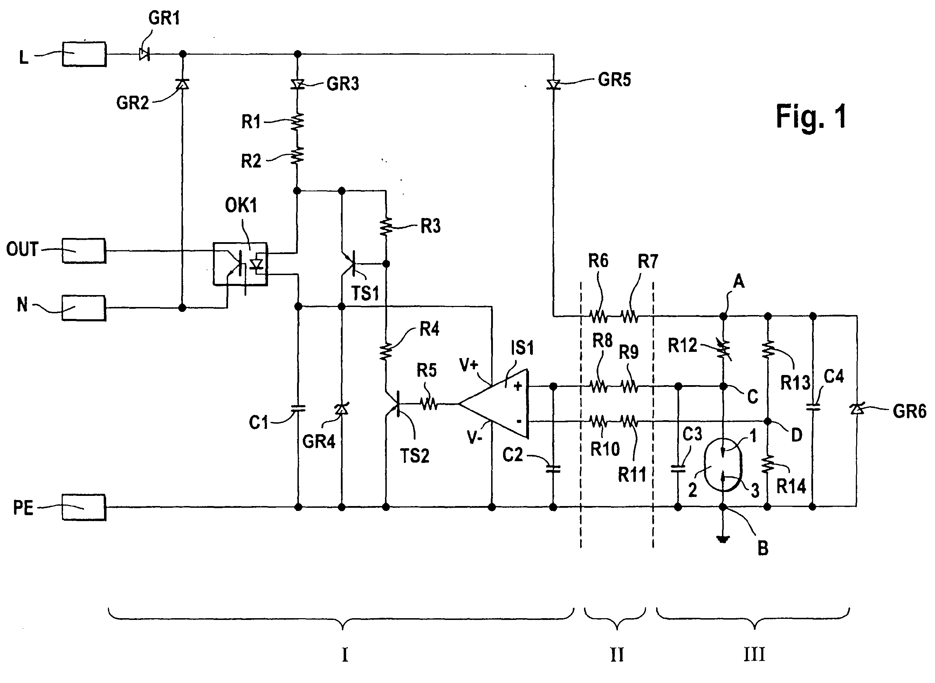

Im folgenden wird die Erfindung in Form eines Ausführungsbeispiels anhand der Zeichnung näher erläutert. Die einzige Figur zeigt einen Prinzipschaltplan der erfindungsgemäßen elektronischen Schaltung.

Die Anschlüsse L und N der Schaltung sind mit der Phase und dem Nulleiter des Stromnetzes verbunden. Dabei liegt die Phase je nach dem, wie ein (nicht gezeichneter) Netzstecker in einer (nicht gezeigten) Steckdose steckt, an Anschluß L oder N an. Die Dioden GR1 und GR2 sorgen zum einen dafür, daß die Netzspannung nicht kurzgeschlossen ist, und zum anderen dafür, daß zwischen den Dioden GR1 und GR2 einerseits und GR3 und GR5 andererseits stets die (gleichgerichtete) Phase anliegt. Die Dioden GR3 und GR5 dienen der Entkopplung der Schaltungsteile I (Auswerteeinheit) und III (Sensoreinheit). An den Anschluß PE der Schaltung ist Erde angeschlossen.

Über zwei erste Schutzimpedanzen R6 und R7 sowie einen veränderlichen Widerstand R12 ist die Phase der Netzspannung mit einer Elektrode 1 in einer Wäschetrommel verbunden. Eine andere Elektrode 3 ist geerdet. Die Elektroden 1 und 3 bilden das Sensorelement 2.

Schutzimpedanzen sind bestimmte Sicherheitsstandards erfüllende Bauteile. Sie bestehen aus einem oder mehreren Widerständen, Kondensatoren oder Induktivitäten oder aus Kombinationen derselben.

An die Knotenpunkte A und B, d. h. parallel zu dem Zweig, der von dem regelbaren Widerstand R12 und dem durch die beiden Elektroden 1 und 3 gebildeten Sensorelement 2 besteht, ist eine aus zwei Widerständen R13 und R14 bestehende Spannungsteilerschaltung, ein Kondensator C4 und eine Zener-Diode GR6 angeschlossen. Der Kondensator C4 glättet die Spannung zwischen den Knotenpunkten A und B, und die Zener-Diode GR6 stabilisiert sie auf einen vorgegebenen Wert (typischerweise 10 Volt).

Am Knotenpunkt C erfolgt ein erster Spannungsabgriff, der über zwei zweite Schutzimpedanzen R8 und R9 mit einem Eingang (+) eines Komparators IS1, welcher zu der Auswerteeinheit I gehört, verbunden ist. An den anderen Eingang (-) des Komparators IS1 ist über zwei dritte Schutzimpedanzen R10 und R11 ein zweiter Spannungsabgriff aus der Spannungsteilerschaltung im Knotenpunkt D angeschlossen.

In dem die Schutzimpedanzen R6 bis R11 enthaltenden Bereich II, welcher den das Sensorelement 2 enthaltenden Sensorbereich III von der Auswerteeinheit I trennt, ist aus Sicherheitsgründen dafür gesorgt, daß dort verlaufende Leiter unterschiedlichen Potentials voneinander einen Abstand von mindestens 8mm Kriech- und Luftstrecke haben.

Über die Diode GR3, über Widerstände R1 und R2 sowie über eine Leuchtdiode in einem Optokoppler OK1 wird der Komparator IS1 in der Auswerteeinheit I mit Spannung versorgt. Der Kondensator C1 und die Zener-Diode GR4 sorgen dafür, daß diese Spannung geglättet und stabilisiert ist.

Im Komparator IS1 werden die Spannungen im Knotenpunkt C und im Knotenpunkt D, jeweils gegenüber Erde (Knotenpunkt B), verglichen. Dabei ist die im Knotenpunkt C abgegriffene Spannung, welche durch die Bewegung der Wäsche in der sich drehenden Wäschetrommel zeitlich sehr unregelmäßig ist, durch zwei Kondensatoren C2 und C3 geglättet. Da am Beginn des Trocknungsvorgangs die noch nasse Wäsche einen geringen elektrischen Widerstand hat, ist die Spannung im Knotenpunkt C und damit auch am Eingang (+) des Komparators IS1 regelmäßig niedriger als die im Knotenpunkt D bzw. am Eingang (-) des Komparators IS1. Mit fortschreitendem Trocknungsvorgang steigt die Spannung am Eingang (+) an. Überschreitet die Spannung am Eingang (+) den Wert der am Eingang (-) des Komparators IS1 anliegenden Spannung, so schaltet dieser über einen Widerstand R5 einen Transistor TS2 durch, wodurch über einen Spannungsteiler mit Widerständen R4 und R3 auch ein Transistor TS1 durchgeschaltet wird. Dadurch wird die vorher stets leuchtende (bzw. aufgrund der gleichgerichteten Wechselspannung blinkende) Leuchtdiode im Optokoppler OK1 kurzgeschlossen und erlischt. Der Schalter (Transistor) im Optokoppler OK1 öffnet daraufhin dauerhaft, und ein Ausgang OUT ist dauerhaft nicht mehr mit dem Anschluß N leitend verbunden. Eine an diesen Ausgang OUT angeschlossene Steuereinheit registriert diesen Schaltvorgang und schaltet daraufhin den Wäschetrocknungsvorgang ab.

Mit dem veränderlichen Widerstand R12 ist einstellbar, bis zu welchem Trocknungsgrad der Wäsche der Trocknungsvorgang fortgesetzt werden soll. Wird für den Widerstand R12 ein niedriger Wert gewählt, so überschreitet die Spannung im Knotenpunkt C bereits dann den Wert in Knotenpunkt D, wenn die Wäsche zwischen den Elektroden 1 und 3 einen verhältnismäßig geringen elektrischen Widerstand aufweist, also noch relativ feucht ist. Wird für den Widerstand R12 jedoch ein hoher Wert eingestellt, so überschreitet die Spannung im Punkt C erst dann den Wert in Punkt D, wenn die Wäsche einen verhältnismäßig hohen Widerstand aufweist, also recht trocken ist. Auf diese Weise kann eingestellt werden, bei welcher Restfeuchte in der Wäsche der Trocknungsvorgang beendet werden soll.

In einer Variation des hier beschriebenen Ausführungsbeispiels, die nicht Teil der vorliegenden Erfindung ist, kann auch vorgesehen sein, daß die Widerstände R1 und R2 als Schutzimpedanzen ausgeführt sind und die Leiter unterschiedlichen Potentials in diesem Abschnitt voneinander einen Mindestabstand von 8mm haben. In diesem Fall brauchen die Widerstände R8 bis R11 nicht mehr als Schutzimpedanzen ausgeführt sein und können sogar entfallen, da nun bereits die Auswerteeinheit I über Schutzimpedanzen an der Netzspannung hängt. Zusätzlich können nun auch die Schutzimpedanzen R6 und R7 (und die Diode GR5) entfallen, falls die Spannungsversorgung des Sensorbereichs III über die Spannungsversorgung der Auswerteeinheit I erfolgt, falls also z. B. der Knotenpunkt A direkt mit der Auswerteeinheit I zwischen der Schutzimpedanz R2 und dem. Widerstand R3 verbunden ist, denn es bleibt weiterhin gewährleistet, daß die Elektrode 1 nur über mindestens eine Schutzimpedanz (jetzt R1 und R2) mit der Netzspannung verbunden ist.

Im beschriebenen Ausführungsbeispiel verläuft der Stromfluß von Phase nach Erde. Dies ist möglich, da der Nulleiter bekanntlich stets mit Erde verbunden ist. Allerdings muß aufgrund technischer Vorschriften gewährleistet sein, daß der Strom im Erdleiter einen bestimmten Wert nicht überschreitet. Ein Betrieb der Auswerteeinheit I und ebenso der Sensoreinheit III zwischen Phase und Nulleiter ist im vorliegenden Ausführungsbeispiel nicht realisiert, weil aufgrund der Tatsache, daß ein Netzstecker auf zwei verschiedene Arten in eine Steckdose gesteckt werden kann, nicht sichergestellt ist, ob die Phase der Netzspannung mit Anschluß L oder mit Anschluß N verbunden ist. Deshalb werden in vorliegender Schaltung beide Anschlüsse L und N zum Anschluß der Phase der Netzspannung verwendet, wobei die Dioden GR1 und GR2 einen Kurzschluß der Netzspannung verhindern und dazu dienen, daß zwischen ihnen einerseits und den Dioden GR3 und GR5 andererseits stets die (gleichgerichtete) Phase der Netzspannung anliegt.

Ist das Problem der Unbestimmtheit des Phasenanschlusses nicht gegeben, wie z.B. in den U.S.A., können dagegen die Auswerteeinheit I und ebenso die Sensoreinheit III zwischen Phase und Nulleiter betrieben werden. Dabei ist jedoch zu beachten, daß auch die Elektrode 3 des Sensorelementes 2 über mindestens eine Schutzimpedanz mit der Netzspannung verbunden sein muß, falls sie nicht geerdet ist.

Dafür kann der Optokoppler OK1 durch einen einfachen Schalter, z. B. einen Transistor, ersetzt werden. Der Optokoppler OK1 ist im beschriebenen Ausführungsbeispiel nämlich nur deshalb eingesetzt, weil der Stromfluß in der Auswerteeinheit I zwischen Phase und Erde erfolgt und trotzdem gewährleistet sein soll, daß die am Ausgang OUT angeschlossene Steuereinheit auch mit einem Stromfluß zwischen Phase und Nulleiter betrieben werden kann. Ein derartiger Schaltungsanfban ist z.B. aus der bereits eingang erwähnten US-A-5,367,265 bekannt. Bei Ersetzen des Optokopplers OK1 durch einen einfachen Schalter ist zu beachten, daß dieser von der Auswerteeinheit I über mindestens eine Schutzimpdanz angesteuert werden muß, falls nicht die Widerstände R8 bis R11, sondern R1 und R2 als Schutzimpedanzen ausgeführt sind.

Statt der im Ausführungsbeispiel gezeigten Spannungsversorgung ist es auch möglich, die elektronische Schaltung über ein Kondensatornetzteil mit Gleichrichter mit elektrischer Spannung zu versorgen. Auch dabei ist jedoch zu beachten, daß die nicht geerdete(n) Elektrode(n) stets nur über mindestens eine Schutzimpedanz mit der Netzspannung verbunden ist/sind.

Die Bestimmung des elektrischen Widerstands der Wäsche zwischen den Elektroden 1 und 3 kann außer durch Vergleich der elektrischen Spannunospotentiale an den Knotenpunkten C und D mittels des Komparators IS1 auch anders erfolgen, z. B. durch Verwendung einer Zener-Diode oder eines ähnlich wirkenden Schalters, der bei Erreichen eines bestimmten, im Knotenpunkt C anliegenden Spannungswertes schaltet bzw. ein Signal liefert, auf das hin der Trocknungsvorgang beendet wird. Auch eine direkte Messung des Widerstandes zwischen den Elektroden 1 und 3 mittels Strom- und/oder Spannungsmesser ist möglich.

## Patentansprüche

1. Elektronische Schaltung zur Ermittlung des Trocknungsgrades von Wäsche in einem Wäschetrockner mit mindestens zwei in einer Wäschetrommel angebrachten Elektroden (1, 3) und einer mit mindestens einer der Elektroden (1) in Wirkverbindung stehender Auswerteeinheit (I), wobei zumindest eine der Elektroden (1) auf einem von Erde verschiedenen Potential liegt und die Ermittlung des Trocknungsgrades durch Messung des elektrischen Widerstandes der Wäsche über die Elektroden (1, 3) erfolgt, und die auf einem von Erde verschiedenen Potential liegende Elektrode (1) über mindestens eine erste Schutzimpedanz (R6, R7) mit der Phase der Netzspannung verbunden ist, während die andere Elektrode (3) mit Erde verbunden ist,
**dadurch gekennzeichnet,**
**dass** die auf einem von Erde verschiedenen Potential liegende Elektrode (1) über mindestens eine zweite Schutzimpedanz (R8, R9) mit der Auswerteeinheit (I) verbunden ist.

2. Elektronische Schaltung nach Anspruch1,
**dadurch gekennzeichnet,**
**dass** die auf einem von Erde verschiedenen Potential liegende Elektrode
(1) als ein erster Abgriff (C) über die mindestens eine zweite Schutzimpedanz (R8, R9) mit der Auswerteeinheit (I) verbunden ist, dass ein zweiter Abgriff (D) aus einer Spannungsteilerschaltung (R13, R14) über mindestens eine dritte Schutzimpedanz (R10, R11) mit der Auswerteeinheit (I) verbunden ist, und dass in der Auswerteeinheit (I) die Potentiale der beiden Abgriffe (C, D) miteinander verglichen und/oder ausgewertet werden.

3. Elektronische Schaltung nach Anspruch 1 oder 2,
**dadurch gekennzeichnet,**
**dass** die Auswerteeinheit (I) mit zumindest einem Spannungsversorgungspol ebenfalls über mindestens eine Schutzimpedanz (R1, R2) an die Phase der Netzspannung angeschlossen ist.

4. Elektronische Schaltung nach einem der vorherigen Ansprüche,
**dadurch gekennzeichnet,**
**dass** das Ausgangssignal der Auswerteeinheit (I) über mindestens eine weitere Schutzimpedanz einer Steuereinheit zugeführt ist.

5. Elektronische Schaltung nach einem der vorherigen Ansprüche,
**dadurch gekennzeichnet, dass** die Schutzimpedanz eine(n) oder mehrere Widerstände, Kondensatoren und/oder Induktivitäten umfasst.

6. Elektronische Schaltung nach einem der vorherigen Ansprüche,
**dadurch gekennzeichnet, dass** die Auswerteeinheit (I) mit einem Spannungsversorgungspol an die Phase der Netzspannung und mit dem anderen an Erde angeschlossen ist.

7. Elektronische Schaltung nach einem der vorherigen Ansprüche,
**dadurch gekennzeichnet,**
**dass** die Auswerteeinheit (I) das Erreichen eines vorbestimmbaren Widerstandswertes der Wäsche beim Trocknungsvorgang erkennt und daraufhin der Steuereinheit ein entsprechendes Signal zukommen lässt.

## Claims

1. Electronic circuit for determining the degree of drying of laundry in a tumble dryer, having at least two electrodes (1, 3), which are fitted in a laundry drum, and an evaluation unit (I) which is operatively connected to at least one of the electrodes (1), with at least one of the electrodes (1) being at a potential other than earth and the degree of drying being determined by measuring the electrical resistance of the laundry by means of the electrodes (1, 3), and the electrode (1) which is at a potential other than earth being connected to the phase of the mains voltage via at least one first protective impedance (R6, R7), while the other electrode (3) is connected to earth,
**characterized**
**in that** the electrode (1) which is at a potential other than earth is connected to the evaluation unit (I) via at least one second protective impedance (R8, R9).

2. Electronic circuit according to Claim 1,
**characterized**
**in that** the electrode (1) which is at a potential other than earth is connected to the evaluation unit (I) via the at least one second protective impedance (R8, R9) as a first tap (C), in that a second tap (D) from a voltage divider circuit (R13, R14) is connected to the evaluation unit (I) via at least one third protective impedance (R10, R11), and in that the potentials of the two taps (C, D) are compared with one another and/or evaluated in the evaluation unit (I).

3. Electronic circuit according to Claim 1 or 2,
**characterized**
**in that** at least one voltage-supply pole of the evaluation unit (I) is likewise connected to the phase of the mains voltage via at least one protective impedance (R1, R2).

4. Electronic circuit according to one of the preceding claims,
**characterized**
**in that** the output signal from the evaluation unit (I) is supplied to a control unit via at least one further protective impedance.

5. Electronic circuit according to one of the preceding claims,
**characterized**
**in that** the protective impedance comprises one or more resistors, capacitors and/or inductors.

6. Electronic circuit according to one of the preceding claims,
**characterized**
**in that** one voltage-supply pole of the evaluation unit (I) is connected to the phase of the mains voltage and the other is connected to earth.

7. Electronic circuit according to one of the preceding claims,
**characterized**
**in that** the evaluation unit (I) identifies when the laundry reaches a predeterminable resistance value during the drying operation, and then transmits a corresponding signal to the control unit.

## Revendications

1. Circuit électronique destiné à déterminer le degré de séchage du linge dans un sèche-linge comprenant au moins deux électrodes (1, 3) logées dans un tambour à linge et une unité d'interprétation (I) en liaison active avec au moins l'une des électrodes (1), au moins l'une des électrodes (1) se trouvant à un potentiel différent de celui de la terre et la détermination du degré de séchage s'effectuant en mesurant la résistance électrique du linge par le biais des électrodes (1, 3) et l'électrode (1) qui se trouve à un potentiel différent de celui de la terre est reliée par le biais d'au moins une première impédance de protection (R6, R7) avec la phase de la tension du réseau alors que l'autre électrode (3) est reliée avec la terre, **caractérisé en ce que** l'électrode (1) qui se trouve à un potentiel différent de celui de la terre est reliée avec l'unité d'interprétation (I) par le biais d'au moins une deuxième impédance de protection (R8, R9).

2. Circuit électronique selon la revendication 1, **caractérisé en ce que** l'électrode (1) qui se trouve à un potentiel différent de celui de la terre est reliée avec l'unité d'interprétation (I) par le biais de l'au moins une deuxième impédance de protection (R8, R9) sous la forme d'une première prise (C), qu'une deuxième prise (D) constituée d'un circuit diviseur de tension (R13, R14) est reliée avec l'unité d'interprétation (I) par le biais d'au moins une troisième impédance de protection (R10, R11) et que les potentiels des deux prises (C, D) sont comparés entre eux et/ou sont interprétés dans l'unité d'interprétation (I).

3. Circuit électronique selon la revendication 1 ou 2, **caractérisé en ce que** l'unité d'interprétation (I) est raccordée à la phase de la tension du réseau elle aussi par le biais d'au moins une impédance de protection (R1, R2) avec au moins une borne d'alimentation électrique.

4. Circuit électronique selon l'une des revendications précédentes, **caractérisé en ce que** le signal de sortie de l'unité d'interprétation (I) est acheminé à une unité de commande par le biais d'au moins une impédance de protection supplémentaire.

5. Circuit électronique selon l'une des revendications précédentes, **caractérisé en ce que** l'impédance de protection comprend une ou plusieurs résistances, condensateurs et/ou inductances.

6. Circuit électronique selon l'une des revendications précédentes, **caractérisé en ce que** l'unité d'interprétation (I) est raccordée à la phase de la tension du réseau avec une borne d'alimentation électrique et à la terre avec l'autre.

7. Circuit électronique selon l'une des revendications précédentes, **caractérisé en ce que** l'unité d'interprétation (I) détecte l'atteinte d'une valeur de résistance pouvant être prédéterminée du linge lors du séchage et l'unité de commande fait ensuite parvenir un signal correspondant.
